# EUROPEAN PATENT APPLICATION

(11) **EP 3 476 636 A1**
(43) Date of publication of application: **01.05.2019**
(21) Application number: 17818961.9
(22) Date of filing: 11.05.2017
(51) Int. Cl.: B60K 6/36, B60K 17/08

(54) **POWER DRIVE SYSTEM AND VEHICLE**

(30) Priority: 29.06.2016 CN 201620669694 U
(71) Applicant: BYD Company Limited, Shenzhen, Guangdong 518118 (CN)
(72) Inventor: LIAN, Yubo, Shenzhen Guangdong 518118 (CN); LIU, Jianjian, Shenzhen Guangdong 518118 (CN); LING, Heping, Shenzhen Guangdong 518118 (CN); ZHAI, Zhen, Shenzhen Guangdong 518118 (CN); XU, Youbin, Shenzhen Guangdong 518118 (CN)
(74) Representative: Hoffmann Eitle
(86) International application number: PCT/CN2017/084029
(87) International publication number: WO 2018/000964

(57) **Abstract**

The present disclosure discloses a power drive system and a vehicle. The power drive system includes: an engine; multiple input shafts, the engine being arranged to selectively engage with at least one of the multiple input shafts and a gear driving gear being arranged on each input shaft; multiple output shafts, a gear driven gear being arranged on each output shaft and; a reverse gear shaft, a first reverse gear shaft gear and a second reverse gear shaft gear being idly mounted on the reverse gear shaft, the first reverse gear shaft gear being meshed with one gear driving gear and each of the first reverse gear shaft gear and the second reverse gear shaft gear being arranged to engage with the reverse gear shaft; a reverse gear output gear, the reverse gear output gear being fixedly arranged on the output shaft and the reverse gear output gear being meshed with the second reverse gear shaft gear; and a first motor generator, the first motor generator being arranged to be linked with the reverse gear shaft.

## Description

### FIELD

The present disclosure relates to the technical field of vehicles, and particularly, to a power drive system and a vehicle.

### BACKGROUND

Along with constant consumption of energy, development and utilization of new energy vehicles has gradually become a trend. As one of new energy vehicles, a hybrid vehicle is driven through an engine and/or a motor and has multiple drive modes. Therefore, the transmission efficiency and the fuel economy can be improved.

However, in a related technology known to the inventor, a transmission in a hybrid vehicle is usually complex in structure, has few transmission modes and, in an all-electric mode, is relatively low in transmission efficiency.

### SUMMARY

The present disclosure aims at resolving one of technical problems in related technologies to some extent. To this end, the present disclosure provides a power drive system. The power drive system has high transmission efficiency in an all-electric mode.

The present disclosure also provides a vehicle.

A power drive system for a vehicle according to the present disclosure includes: an engine; multiple input shafts, the engine being arranged to selectively engage with at least one of the multiple input shafts and a gear driving gear being arranged on each input shaft; multiple output shafts, a gear driven gear being arranged on each output shaft and the multiple gear driven gears being correspondingly meshed with the multiple gear driving gears; a reverse gear shaft, a first reverse gear shaft gear and a second reverse gear shaft gear being idly mounted on the reverse gear shaft, the first reverse gear shaft gear being meshed with one gear driving gear and each of the first reverse gear shaft gear and the second reverse gear shaft gear being arranged to engage with the reverse gear shaft; a reverse gear output gear, the reverse gear output gear being fixedly arranged on one output shaft and the reverse gear output gear being meshed with the second reverse gear shaft gear; and a first motor generator, the first motor generator being arranged to be linked with the reverse gear shaft.

The power drive system according to the present disclosure has multiple working modes and the power performance and economy of the vehicle can be improved. In addition, the first motor generator is in a linkage relationship with the reverse gear shaft, so that the first motor generator is endowed with quite high transmission efficiency, the problem that an all-electric mode can only be implemented by complex gear shifting and a transmission chain in a transmission of a conventional power drive system can be solved, few components are required by transmission in the all-electric mode, a transmission process is reliable and the transmission efficiency is high. Moreover, in terms of control logic, the control logic of the engine and the control logic of the first motor generator are independent of each other, so that the development time and cost of a manufacturer can be reduced and the power drive system can be prevented from high failure rate.

In addition, the power drive system according to the present disclosure may also have the following additional technical characteristics.

In some examples of the present disclosure, the power drive system further includes a first reverse gear shaft synchronizer, and the first reverse gear shaft synchronizer is configured to engage the reverse gear shaft with the first reverse gear shaft gear.

In some examples of the present disclosure, the power drive system further includes a second reverse gear shaft synchronizer, and the second reverse gear shaft synchronizer is configured to engage the reverse gear shaft with the second reverse gear shaft gear.

In some examples of the present disclosure, a first motor gear is also fixedly arranged on the reverse gear shaft, and the first motor gear is linked with the first motor generator.

In some examples of the present disclosure, the power drive system further includes a second motor generator, and the second motor generator is arranged to be linked with the engine.

In some examples of the present disclosure, the power drive system includes a dual clutch, the dual clutch is provided with an input end, a first output end and a second output end, the input end may selectively engage with at least one of the first output end and the second output end, and the engine is connected to the input end.

In some examples of the present disclosure, input end outer teeth are arranged at the input end, and the second motor generator is linked with the input end outer teeth.

In some examples of the present disclosure, the multiple input shafts include a first input shaft and a second input shaft sleeved over the first input shaft, the first input shaft is connected to the first output end, and the second input shaft is connected to the second output end; and the multiple output shafts include a first output shaft and a second output shaft.

In some examples of the present disclosure, a first-gear driving gear and a third- and fifth-gear driving gear are fixedly arranged on the first input shaft, and a second-gear driving gear and a fourth- and sixth-gear driving gear are fixedly arranged on the second input shaft; a first-gear driven gear, a second-gear driven gear, a third-gear driven gear and a fourth-gear driven gear are idly mounted on the first output shaft; a fifth-gear driven gear and a sixth-gear driven gear are idly mounted on the second output shaft; and a first- and third-gear synchronizer positioned between the first-gear driven gear and the third-gear driven gear is arranged on the first output shaft, a second- and fourth-gear synchronizer positioned between the second-gear driven gear and the fourth-gear driven gear is also arranged on the first output shaft, a fifth-gear synchronizer positioned on one side of the fifth-gear driven gear is arranged on the second output shaft, and a sixth-gear synchronizer positioned on one side of the sixth-gear driven gear is also arranged on the second output shaft.

In some examples of the present disclosure, the first reverse gear shaft gear is meshed with the first-gear driving gear.

In some examples of the present disclosure, the power drive system further includes the first reverse gear shaft synchronizer, where the first reverse gear shaft synchronizer is arranged on the reverse gear shaft and configured to engage with the first reverse gear shaft gear; the first reverse gear shaft synchronizer and the fifth-gear synchronizer share a shifting yoke mechanism; when the first reverse gear shaft synchronizer is driven by the shifting yoke mechanism to engage with the first reverse gear shaft gear, the fifth-gear synchronizer is disengaged from the fifth-gear driven gear; and when the fifth-gear synchronizer is driven by the shifting yoke mechanism to engage with the fifth-gear driven gear, the first reverse gear shaft synchronizer is disengaged from the first reverse gear shaft gear.

In some examples of the present disclosure, the power drive system further includes the second reverse gear shaft synchronizer, where the second reverse gear shaft synchronizer is arranged on the reverse gear shaft and configured to engage with the second reverse gear shaft gear; the second reverse gear shaft synchronizer and the sixth-gear synchronizer share a shifting yoke mechanism; when the second reverse gear shaft synchronizer is driven by the shifting yoke mechanism to engage with the second reverse gear shaft gear, the sixth-gear synchronizer is disengaged from the sixth-gear driven gear; and when the sixth-gear synchronizer is driven by the shifting yoke mechanism to engage with the sixth-gear driven gear, the second reverse gear shaft synchronizer is disengaged from the second reverse gear shaft gear.

In some examples of the present disclosure, a first-output-shaft output gear is fixedly arranged on the first output shaft, a second-output-shaft output gear is fixedly arranged on the second output shaft, and the first-output-shaft output gear and the second-output-shaft output gear are meshed with a differential power input gear of the vehicle respectively.

A vehicle according to the present disclosure includes the power drive system.

Beneficial effects of the vehicle are the same as those of the power drive system and are omitted herein.

### BRIEF DESCRIPTION OF THE DRAWINGS

FIG. 1 is a schematic diagram of a power drive system according to an embodiment of the present disclosure; and
FIG. 2 is a schematic diagram of a power drive system according to another embodiment of the present disclosure.

### DETAILED DESCRIPTION

The embodiments of the present disclosure are described in detail below. Examples of the embodiments are illustrated in the accompanying drawings. The embodiments described below with reference to the accompanying drawings are exemplary, and are used for explaining rather than limiting the present disclosure.

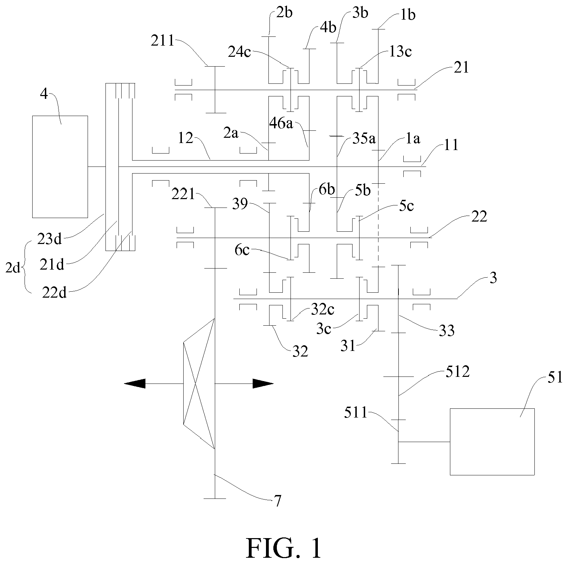

A power drive system 100 according to embodiments of the present disclosure will be described below in combination with FIG. 1-FIG. 2 in detail. The power drive system 100 is applied to a vehicle such as a hybrid vehicle and provides, as a power system of the vehicle, sufficient power and electric energy for normal running of the vehicle.

The power drive system 100 according to the embodiments of the present disclosure mainly includes two parts. One is a power source, and the power source may be an engine 4, a motor generator and the like. The other may be a transmission (including multiple input shafts, multiple output shafts, gear pairs and the like), and the transmission is configured to realize a gear shifting function for output power of the power source to meet a running requirement, charging requirement or the like of the vehicle.

For example, in some embodiments, as shown in FIG. 1-FIG. 2, the power drive system 100 may include, but not limited to, the engine 4, a first motor generator 51 and the transmission.

In combination with FIG. 1, in some embodiments, the transmission mainly includes multiple input shafts (for example, a first input shaft 11 and a second input shaft 12), multiple output shafts (for example, a first output shaft 21 and a second output shaft 22), a reverse gear shaft 3 and related gears and gear shifting elements (for example, synchronizers) on each shaft.

When power is transmitted between the engine 4 and the input shafts, the engine 4 is arranged to selectively engage with at least one of the multiple input shafts. In other words, when the power is transmitted from the engine 4 to the input shafts, the engine 4 may selectively engage with one of the multiple input shafts to transmit the power, or the engine 4 may also selectively simultaneously engage with two or more than two input shafts in the multiple input shafts to transmit the power.

For example, in examples of FIG. 1-FIG. 2, the multiple input shafts may include two input shafts, i.e., the first input shaft 11 and the second input shaft 12, and the engine 4 may selectively engage with one of the first input shaft 11 and the second input shaft 12 to transmit the power. Or, particularly, the engine 4 may also engage with both of the first input shaft 11 and the second input shaft 12 to transmit the power. Of course, it should be understood that the engine 4 may also be disconnected from both of the first input shaft 11 and the second input shaft 12 simultaneously.

For those of ordinary skill in the art, an engagement state between the engine 4 and the input shafts is related to a specific working condition of the power drive system 100, which will be described in detail below in combination with specific embodiments and is omitted herein.

Transmission between the input shafts and the output shafts can be implemented through gear pairs. For example, a gear driving gear is arranged on each input shaft, a gear driven gear is arranged on each output shaft and the multiple gear driven gears are correspondingly meshed with the multiple gear driving gears to form multiple pairs of gear pairs with different gear ratios.

In some embodiments of the present disclosure, as shown in FIG. 1-FIG. 2, the power drive system 100 may have six forward gear pairs, i.e., a first-gear gear pair, a second-gear gear pair, a third-gear gear pair, a fourth-gear gear pair, a fifth-gear gear pair and a sixth-gear gear pair. The power drive system 100 also has a reverse gear pair.

As shown in FIG. 1-FIG. 2, a first reverse gear shaft gear 31 which can be engaged with a reverse gear shaft 3 is idly mounted on the reverse gear shaft 3. In other words, transmission can be implemented between the reverse gear shaft 3 and the first reverse gear shaft gear 31. As shown in FIG. 1-FIG. 2, a first reverse gear shaft synchronizer 3c may also be arranged on the reverse gear shaft 3, and the first reverse gear shaft synchronizer 3c is configured to engage the reverse gear shaft 3 with the first reverse gear shaft gear 31. When the first reverse gear shaft synchronizer 3c is configured to engage the reverse gear shaft 3 with the first reverse gear shaft gear 31, transmission between the reverse gear shaft 3 and the first reverse gear shaft gear 31 is implemented.

As shown in FIG. 1-FIG. 2, a second reverse gear shaft gear 32 which can be engaged with the reverse gear shaft 3 is idly mounted on the reverse gear shaft 3. In other words, transmission can be implemented between the reverse gear shaft 3 and the second reverse gear shaft gear 32. As shown in FIG. 1-FIG. 2, a second reverse gear shaft synchronizer 32c may also be arranged on the reverse gear shaft 3, and the second reverse gear shaft synchronizer 32c is configured to engage the reverse gear shaft 3 with the second reverse gear shaft gear 32. When the second reverse gear shaft synchronizer 32c is configured to engage the reverse gear shaft 3 with the second reverse gear shaft gear 32, transmission between the reverse gear shaft 3 and the second reverse gear shaft gear 32 is implemented. The second reverse gear shaft gear 32 is meshed with a reverse gear output gear 39.

It should be noted that "linkage" can be understood as an associated movement of multiple components (for example, two). For example, linkage of two components refer to that, when one component moves, the other component moves along with it.

For example, in some embodiments of the present disclosure, linkage between a gear and a shaft can be understood as the fact that, when the gear rotates, the shaft linked therewith also rotates, or, when the shaft rotates, the gear linked therewith also rotates.

For another example, linkage between shafts can be understood as the fact that, when one shaft rotates, the other shaft linked therewith also rotates.

For another example, linkage between gears can be understood as the fact that, when one gear rotates, the other gear linked therewith also rotates.

"Linkage" in the following descriptions of the present disclosure is understood like this, unless otherwise specified.

The second reverse gear shaft gear 32 is meshed with the reverse gear output gear 39. The reverse gear output gear 39 may be fixed on one output shaft. As shown in FIG. 1-FIG. 2, the reverse gear output gear 39 is fixed on the second output shaft 22, so that the reverse gear output gear 39 can be arranged at a reasonable position and the size of the power drive system 100 can be further be reduced.

The first reverse gear shaft gear 31 is meshed with one gear driving gear. For example, as shown in FIG. 1-FIG. 2, the first reverse gear shaft gear 31 is meshed with a first-gear driving gear 1a. In such a manner, the first reverse gear shaft gear 31 and the first-gear driving gear 1a form the reverse gear pair together and the power can be transmitted between the reverse gear shaft 3 and the input shafts.

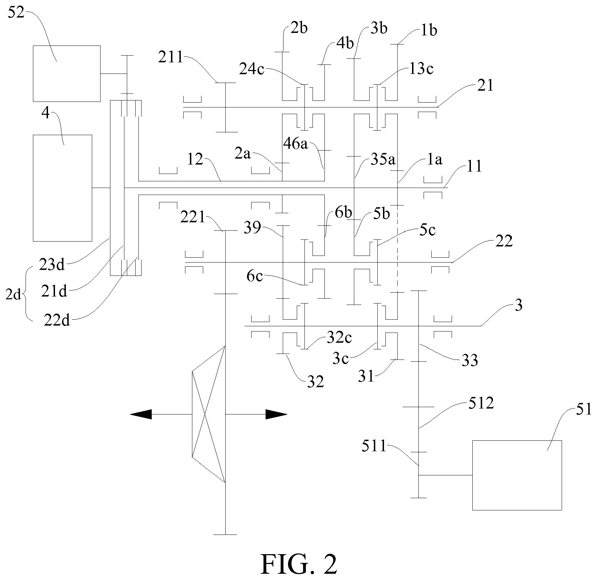

The arrangement forms and numbers of motor generators are also various. For example, as shown in FIG. 1, there is only the first motor generator 51 in the power drive system 100. As shown in FIG. 2, there are the first motor generator 51 and a second motor generator 52 in the power drive system 100.

The multiple output shafts are linked with a differential power input gear 7 of the vehicle, wherein an output gear is arranged on each output shaft and the output gear is meshed with the differential power input gear 7. For example, as shown in FIG. 1, the output shafts include the first output shaft 21 and the second output shaft 22. A first-output-shaft output gear 211 is fixedly arranged on the first output shaft 21, a second-output-shaft output gear 221 is fixedly arranged on the second output shaft 22, and the first-output-shaft output gear 211 and the second-output-shaft output gear 221 are meshed with the differential power input gear 7 of the vehicle respectively. Therefore, the power transmitted by the engine 4 may be transmitted to the differential power input gear 7 through the first-output-shaft output gear 211 on the first output shaft 21, the power transmitted by the engine 4 may also be transmitted to the differential power input gear 7 through the second-output-shaft output gear 221, or the power transmitted by the engine 4 may further be transmitted to the differential power input gear 7 through the output gears on the two output shafts.

A specific arrangement form for the first motor generator 51 will be described below in combination with FIG. 1 in detail. As shown in FIG. 1, the first motor generator 51 is arranged to be linked with the reverse gear shaft 3, a first motor gear 33 is fixedly arranged on the reverse gear shaft 3, the first motor generator 51 is in transmission with the reverse gear shaft 3 through a first transmission gear 511, a second transmission gear 512 and the first motor gear 33, and the reverse gear shaft 3 is in transmission with the reverse gear output gear 39 through the second reverse gear shaft gear 32.

An arrangement form for the second motor generator 52 will be described below in combination with FIG. 2 in detail. As shown in FIG. 2, the second motor generator 52 is arranged to be linked with the engine 4. When the second motor generator 52 is used as a motor, the second motor generator 52 may be configured to start the engine 4, or the second motor generator 52 may be configured to drive wheels to rotate. When the second motor generator 52 is used as a generator, the second motor generator 52 may be driven by the engine 4 to generate power, and the second motor generator 52 may be driven by energy transmitted from the vehicle through the output shafts to generate power.

As shown in FIG. 1-FIG. 2, the power drive system 100 may further include a dual clutch 2d, the dual clutch 2d is provided with an input end 23d, a first output end 21 d and a second output end 22d, the input end 23d may selectively engage with at least one of the first output end 21d and the second output end 22d, and the engine 4 is connected to the input end 23d. The first output end 21d is connected to the first output shaft 21 and the second output end 22d is connected to the second output shaft 22. Input end outer teeth are arranged at the input end 23d, and the second motor generator 52 is meshed with the input end outer teeth. Since the input end 23d is connected to the engine 4, the second motor generator 52 can be linked with the engine 4 through the input end 23d. A transmission gear connected to the input end outer teeth can be fixedly arranged on a motor shaft of the second motor generator 52.

It should be understood that a specific engagement state of the dual clutch 2d is influenced by a control strategy. Those skilled in the art can adaptively set the control strategy according to a practically required transmission mode, to switch multiple modes that the input end 23d is disconnected from both of the two output ends and the input end 23d engage with at least one of the two output ends.

As shown in FIG. 1-FIG. 2, the second input shaft 12 is idly mounted on the first input shaft 11, so that the structure of the power drive system 100 is compact, the axial length of the power drive system 100 can be effectively reduced, which can make the size of the power drive system 100 small and facilitate arrangement of the power drive system 100 on the vehicle.

As shown in FIG. 1-FIG. 2, the first-gear driving gear 1a and a third- and fifth-gear driving gear 35a may be arranged on the first input shaft 11, a second-gear driving gear 2a and a fourth- and sixth-gear driving gear 46a may be arranged on the second input shaft 12, and each gear driving gear synchronously rotates along with the corresponding input shaft.

Correspondingly, as shown in FIG. 1-FIG. 2, a first-gear driven gear 1b, a second-gear driven gear 2b, a third-gear driven gear 3b and a fourth-gear driven gear 4b are arranged on the first output shaft 21, a fifth-gear driven gear 5b and a sixth-gear driven gear 6b are arranged on the second output shaft 22, and each gear driven gear is arranged on the corresponding output shaft in the idle sleeving manner, that is, each gear driven gear can differentially rotate relative to the corresponding output shaft.

The first-gear driven gear 1b is meshed with the first-gear driving gear 1a to form a first-gear gear pair. The second-gear driven gear 2b is meshed with the second-gear driving gear 2a to form a second-gear gear pair. The third-gear driven gear 3b is meshed with the third- and fifth-gear driving gear 35a to from a third-gear gear pair. The fourth-gear driven gear 4b is meshed with the fourth- and sixth-gear driving gear 46a to form a fourth-gear gear pair. The fifth-gear driven gear 5b is meshed with the third- and fifth-gear driving gear 35a to form the fifth-gear gear pair. The sixth-gear driven gear 6b is meshed with the fourth- and sixth-gear driving gear 46a to form a sixth-gear gear pair. The first-gear driving gear 1a is meshed with the first reverse gear shaft gear 31 to form a reverse gear pair.

The fourth-gear gear pair and the sixth-gear gear pair share the fourth- and sixth-gear driving gear 46a and the third-gear gear pair and the fifth-gear gear pair share the third- and fifth-gear driving gear 35a, so that two gear driving gears can be reduced, which makes the power drive system 100 more compact in structure and smaller in axial size.

Since the driven gear and the output shaft adopt an idle sleeving structure, the synchronizers are required to be arranged to synchronize the corresponding driven gear and output shaft to implement output of the power.

In some embodiments, as shown in FIG. 1-FIG. 2, the power drive system 100 includes a first- and third-gear synchronizer 13c, a second- and fourth-gear synchronizer 24c, a fifth-gear synchronizer 5c and a sixth-gear synchronizer 6c.

As shown in FIG. 1, the first- and third-gear synchronizer 13c is arranged on the first output shaft 21 and positioned between the first-gear driven gear 1b and the third-gear driven gear 3b. The first-gear driven gear 1b or the third-gear driven gear 3b can engage with the first output shaft 21 through the first- and third-gear synchronizer 13c, so that the driven gear and the output shaft can rotate synchronously.

For example, in combination with FIG. 1, an engagement sheath of the first- and third-gear synchronizer 13c moves leftwards to engage with the third-gear driven gear 3b with the first output shaft 21, so that the third-gear driven gear 3b and the first output shaft 21 can rotate synchronously. The engagement sheath of the first- and third-gear synchronizer 13c moves rightwards to engage the first-gear driven gear 1b with the first output shaft 21, so that the first-gear driven gear 1b and the first output shaft 21 can rotate synchronously.

As shown in FIG. 1, similarly, the second- and fourth-gear synchronizer 24c is arranged on the first output shaft 21 and positioned between the second-gear driven gear 2b and the fourth-gear driven gear 4b. The second-gear driven gear 2b or the fourth-gear driven gear 4b can engage with the first output shaft 21 through the second- and fourth-gear synchronizer 24c, so that the driven gear and the output shaft can rotate synchronously.

For example, in combination with FIG. 1, an engagement sheath of the second- and fourth-gear synchronizer 24c moves leftwards to engage the second-gear driven gear 2b with the first output shaft 21, so that the second-gear driven gear 2b and the first output shaft 21 can rotate synchronously. The engagement sheath of the second- and fourth-gear synchronizer 24c moves rightwards to engage the fourth-gear driven gear 4b with the first output shaft 21, so that the fourth-gear driven gear 4b and the first output shaft 21 can rotate synchronously.

As shown in FIG. 1, similarly, the fifth-gear synchronizer 5c is arranged on the second output shaft 22, the fifth-gear synchronizer 5c is positioned on one side (for example, the right side) of the fifth-gear driven gear 5b, and the fifth-gear synchronizer 5c is configured to engage the fifth-gear driven gear 5b with the second output shaft 22. For another example, an engagement sheath of the fifth-gear synchronizer 5c moves leftwards to engage the fifth-gear driven gear 5b with the second output shaft 22, so that the fifth-gear driven gear 5b and the second output shaft 22 rotate synchronously.

As shown in FIG. 1, similarly, the sixth-gear synchronizer 6c is arranged on the second output shaft 22, the sixth-gear synchronizer 6c is positioned on one side, for example, the left side, of the sixth-gear driven gear 6b, and the sixth-gear synchronizer 6c is configured to engage the sixth-gear driven gear 6b with the second output shaft 22. For example, an engagement sheath of the sixth-gear synchronizer 6c moves rightwards to engage the sixth-gear driven gear 6b with the second output shaft 22, so that the sixth-gear driven gear 6b and the second output shaft 22 rotate synchronously.

In some embodiments, as shown in FIG. 1, distances between each of the second-gear driving gear 2a, the fourth- and sixth-gear driving gear 46a, the third- and fifth-gear driving gear 35a and the first-gear driving gear 1a and the engine 4 progressively increase. Therefore, gears are arranged more reasonably, and the power drive system 100 is more compact and relatively smaller in radial and axial size.

The first reverse gear shaft gear 31 is arranged on the reverse gear shaft 3 in the idle sleeving manner. Moreover, the first reverse gear shaft synchronizer 3c configured to engage with the first reverse gear shaft gear 31 is arranged on the reverse gear shaft 3, where the fifth-gear synchronizer 5c is positioned on the right side of the fifth-gear driven gear 5b and the first reverse gear shaft synchronizer 3c is positioned on the left side of the first reverse gear shaft gear 31, so that the first reverse gear shaft synchronizer 3c and the fifth-gear synchronizer 5c can share the same shifting yoke mechanism. When the first reverse gear shaft synchronizer 3c is driven by the shifting yoke mechanism to engage with the first reverse gear shaft gear 31, the fifth-gear synchronizer 5c is disengaged from the fifth-gear driven gear 5b, and when the fifth-gear synchronizer 5c is driven by the shifting yoke mechanism to engage with the fifth-gear driven gear 5b, the first reverse gear shaft synchronizer 3c is disengaged from the first reverse gear shaft gear 31. Specifically, when the engagement sheath is driven by the shifting yoke mechanism to move rightwards, the first reverse gear shaft synchronizer 3c engage with the first reverse gear shaft gear 31 and the fifth-gear synchronizer 5c is disengaged from the fifth-gear driven gear 5b, and when the engagement sheath is driven by the shifting yoke mechanism to move leftwards, the fifth-gear synchronizer 5c engages with the fifth-gear driven gear 5b and the first reverse gear shaft synchronizer 3c is disengaged from the first reverse gear shaft gear 31. Therefore, a shifting yoke mechanism can be eliminated for the power drive system 100, and the power drive system 100 is simple in structure and light in weight.

The second reverse gear shaft synchronizer 32c is positioned on the right side of the second reverse gear shaft gear 32 and the sixth-gear synchronizer 6c is positioned on the left side of the sixth-gear driven gear 6b, so that the second reverse gear shaft synchronizer 32c and the sixth-gear synchronizer 6c can share the same shifting yoke mechanism. When the second reverse gear shaft synchronizer 32c is driven by the shifting yoke mechanism to engage with the second reverse gear shaft gear 32, the sixth-gear synchronizer 6c is disengaged from the sixth-gear driven gear 6b, and when the sixth-gear synchronizer 6c is driven by the shifting yoke mechanism to engage with the sixth-gear driven gear 6b, the second reverse gear shaft synchronizer 32c is disengaged from the second reverse gear shaft gear 32. Specifically, when the engagement sheath is driven by the shifting yoke mechanism to move leftwards, the second reverse gear shaft synchronizer engage with the second reverse gear shaft gear 32 and the sixth-gear synchronizer 6c is disengaged from the sixth-gear driven gear 6b, and when the engagement sheath is driven by the shifting yoke mechanism to move rightwards, the sixth-gear synchronizer 6c engage with the sixth-gear driven gear 6b and the second reverse gear shaft synchronizer 32c is disengaged from the second reverse gear shaft gear 32.

Working modes of the power drive system 100 according to the embodiments of the present disclosure will be described below in detail with the power drive system 100 shown in FIG. 1 as an example.

A first parking power generation mode: the input end 23d of the dual clutch 2d engage with the first output end 21d, and the power of the engine 4 is transmitted to the first motor generator 51 sequentially through the dual clutch 2d, the first input shaft 11, the first-gear driving gear 1a, the first reverse gear shaft gear 31, the first reverse gear shaft synchronizer 3c, the reverse gear shaft 3, the first motor gear 33, the second transmission gear 512 and the first transmission gear 511. In such case, the first motor generator 51 is used as the generator.

A second parking power generation mode: the power of the engine 4 is transmitted to the second output shaft 22 through the fifth-gear gear pair or the sixth-gear gear pair, the second reverse gear shaft gear 32 and the reverse gear shaft 3 are synchronized by the second reverse gear shaft synchronizer 32c, and in such a manner, the first motor generator 51, the reverse gear shaft 3 and the second output shaft 22 form a linkage relationship. The first motor generator 51 is used as the generator.

A first running power generation mode: the input end 23d of the dual clutch 2d engage with the first output end 21 d, and a part of the power of the engine 4 is transmitted to the first motor generator 51 sequentially through the dual clutch 2d, the first input shaft 11, the first-gear driving gear 1a, the first reverse gear shaft gear 31, the first reverse gear shaft synchronizer 3c, the reverse gear shaft 3, the first motor gear 33, the second transmission gear 512 and the first transmission gear 511. In such case, the first motor generator 51 is used as the generator. The other part of the power of the engine 4 needs to be transmitted to the differential power input gear 7 through a transmission. Descriptions will be made below with a first gear as an example. The input end 23d of the dual clutch 2d is connected to the first output end 21d, first- and third-gear synchronizer 13c engages the first-gear driven gear 1b with the first output shaft 21, and the other part of the power of the engine 4 is transmitted to the wheels to drive the vehicle to move sequentially through the first-gear driving gear 1a, the first-gear driven gear 1b, the first- and third-gear synchronizer 13c, the first output shaft 21, the first-output-shaft output gear 211 and the differential power input gear 7. Transmission processes for other gears are similar to that for the first gear and are omitted herein.

A second running power generation mode: a part of the power of the engine 4 is transmitted to the second output shaft 22 through the fifth-gear gear pair or the sixth-gear gear pair, the second reverse gear shaft gear 32 and the reverse gear shaft 3 are synchronized by the second reverse gear shaft synchronizer 32c, and in such a manner, the first motor generator 51, the reverse gear shaft 3 and the second output shaft 22 form the linkage relationship. The first motor generator 51 is used as the generator. The other part of the power of the engine 4 needs to be transmitted to the differential power input gear 7 through the transmission. Descriptions will be made below with the first gear as an example. The input end 23d of the dual clutch 2d is connected to the first output end 21d, the first- and third-gear synchronizer 13c engages the first-gear driven gear 1b with the first output shaft 21, and the other part of the power of the engine 4 is transmitted to the wheels to drive the vehicle to move sequentially through the first-gear driving gear 1a, the first-gear driven gear 1b, the first- and third-gear synchronizer 13c, the first output shaft 21, the first-output-shaft output gear 211 and the differential power input gear 7. The transmission processes for the other gears are similar to that for the first gear and are omitted herein.

An all-electric mode: the first motor generator 51 is used as the motor, and the power of the first motor generator 51 is transmitted to the wheels to drive the vehicle to move sequentially through the first transmission gear 511, the second transmission gear 512, the first motor gear 33, the reverse gear shaft 3, the second reverse gear shaft synchronizer 32c, the second reverse gear shaft gear 32, the reverse gear output gear 39, the second output shaft 22, the second-output-shaft output gear 221 and the differential power input gear 7.

An energy recovery mode: the power transmitted by the vehicle wheels is transmitted to the first motor generator 51 sequentially through the differential power input gear 7, the second-output-shaft output gear 221, the second output shaft 22, the reverse gear output gear 39, the second reverse gear shaft gear 32, the second reverse gear shaft synchronizer 32c, the reverse gear shaft 3, the first motor gear 33, the second transmission gear 512 and the first transmission gear 511. The first motor generator 51 is used as the generator.

Compared with the drive power system 100 shown in FIG. 1, the power drive system 100 shown in FIG. 2 further includes the second motor generator 52. In such case, the working modes, particularly the all-electric mode, of the power drive system 100 shown in FIG. 2 will change.

A first parking power generation mode: the input end 23d of the dual clutch 2d engages with the first output end 21d, and a part of the power of the engine 4 is transmitted to the first motor generator 51 sequentially through the dual clutch 2d, the first input shaft 11, the first-gear driving gear 1a, the first reverse gear shaft gear 31, the first reverse gear shaft synchronizer 3c, the reverse gear shaft 3, the first motor gear 33, the second transmission gear 512 and the first transmission gear 511. In such case, the first motor generator 51 is used as the generator. The other part of the power of the engine 4 is configured for the second motor generator 52 to generate power.

A second parking power generation mode: a part of the power of the engine 4 is transmitted to the second output shaft 22 through the fifth-gear gear pair or the sixth-gear gear pair, the second reverse gear shaft gear 32 and the reverse gear shaft 3 are synchronized by the second reverse gear shaft synchronizer 32c, and in such a manner, the first motor generator 51, the reverse gear shaft 3 and the second output shaft 22 form the linkage relationship. The first motor generator 51 is used as the generator. The other part of the power of the engine 4 can be configured for the second motor generator 52 to generate power.

A third parking power generation mode: the input end 23d of the dual clutch 2d is disconnected from the first output end 21d and the second output end 22d respectively and, in such case, all of the power of the engine 4 is configured for the second power generator 52 to generate power.

A first running power generation mode: the input end 23d of the dual clutch 2d engages with the first output end 21d, and a part of the power of the engine 4 is transmitted to the first motor generator 51 sequentially through the dual clutch 2d, the first input shaft 11, the first-gear driving gear 1a, the first reverse gear shaft gear 31, the first reverse gear shaft synchronizer 3c, the reverse gear shaft 3, the first motor gear 33, the second transmission gear 512 and the first transmission gear 511. In such case, the first motor generator 51 is used as the generator. Another part of the power of the engine 4 needs to be transmitted to the differential power input gear 7 through the transmission. Descriptions will be made below with the first gear as an example. The input end 23d of the dual clutch 2d is connected to the first output end 21d, the first- and third-gear synchronizer 13c engages the first-gear driven gear 1b with the first output shaft 21, and another part of the power of the engine 4 is transmitted to the wheels to drive the vehicle to move sequentially through the first-gear driving gear 1a, the first-gear driven gear 1b, the first- and third-gear synchronizer 13c, the first output shaft 21, the first-output-shaft output gear 211 and the differential power input gear 7. The transmission processes for the other gears are similar to that for the first gear and are omitted herein. A further part of the power of the engine 4 is configured for the second motor generator 52 to generate power.

A second running power generation mode: a part of the power of the engine 4 is transmitted to the second output shaft 22 through the fifth-gear gear pair or the sixth-gear gear pair, the second reverse gear shaft gear 32 and the reverse gear shaft 3 are synchronized by the second reverse gear shaft synchronizer 32c, and in such a manner, the first motor generator 51, the reverse gear shaft 3 and the second output shaft 22 form the linkage relationship. The first motor generator 51 is used as the generator. Another part of the power of the engine 4 needs to be transmitted to the differential power input gear 7 through the transmission. Descriptions will be made below with the first gear as an example. The input end 23d of the dual clutch 2d is connected to the first output end 21d, the first- and third-gear synchronizer 13c engages the first-gear driven gear 1b with the first output shaft 21, and another part of the power of the engine 4 is transmitted to the wheels to drive the vehicle to move sequentially through the first-gear driving gear 1a, the first-gear driven gear 1b, the first- and third-gear synchronizer 13c, the first output shaft 21, the first-output-shaft output gear 211 and the differential power input gear 7. The transmission processes for the other gears are similar to that for the first gear and are omitted herein. A further part of the power of the engine 4 is configured for the second motor generator 52 to generate power.

A third running power generation mode: a part of the power of the engine 4 is configured for the second motor generator 52 to generate power. Another part of the power of the engine 4 is configured to be transmitted to the wheels to drive the vehicle to move through the transmission. Descriptions will be made below with the first gear as an example. The input end 23d of the dual clutch 2d is connected to the first output end 21d, the first- and third-gear synchronizer 13c engages the first-gear driven gear 1b with the first output shaft 21 through the first- and third-gear synchronizer 13c, and another part of the power of the engine 4 is transmitted to the wheels to drive the vehicle to move sequentially through the first-gear driving gear 1a, the first-gear driven gear 1b, the first- and third-gear synchronizer 13c, the first output shaft 21, the first-output-shaft output gear 211 and the differential power input gear 7. The transmission processes for the other gears are similar to that for the first gear and are omitted herein. A further part of the power of the engine 4 is configured for the second motor generator 52 to generate power.

A first all-electric mode: the first motor generator 51 is used as the motor, and the power of the first motor generator 51 is transmitted to the wheels to drive the vehicle to move sequentially through the first transmission gear 511, the second transmission gear 512, the first motor gear 33, the reverse gear shaft 3, the second reverse gear shaft synchronizer 32c, the second reverse gear shaft gear 32, the reverse gear output gear 39, the second output shaft 22, the second-output-shaft output gear 221 and the differential power input gear 7.

A second all-electric mode: the second motor generator 52 is used as the motor, and the power of the second motor generator 52 is transmitted to the wheels to drive the vehicle to move through the transmission. Descriptions will be made below with the first gear as an example. The input end 23d of the dual clutch 2d is connected to the first output end 21d, the first- and third-gear synchronizer 13c engages the first-gear driven gear 1b with the first output shaft 21, and the power of the second motor generator 52 is transmitted to the wheels to drive the vehicle to move sequentially through the first-gear driving gear 1a, the first-gear driven gear 1b, the first- and third-gear synchronizer 13c, the first output shaft 21, the first-output-shaft output gear 211 and the differential power input gear 7. The transmission processes for the other gears are similar to that for the first gear and are omitted herein.

An energy recovery mode: the power transmitted by the vehicle wheels is transmitted to the first motor generator 51 sequentially through the differential power input gear 7, the second-output-shaft output gear 221, the second output shaft 22, the reverse gear output gear 39, the second reverse gear shaft gear 32, the second reverse gear shaft synchronizer 32c, the reverse gear shaft 3, the first motor gear 33, the second transmission gear 512 and the first transmission gear 511. The first motor generator 51 is used as the generator.

According to power drive system 100 of the embodiments of the present disclosure, parking power generation can be implemented, so that the working modes of the power drive system 100 can be enriched and the power performance and economy of the vehicle can be improved.

The first motor generator 51 is in the linkage relationship with the reverse gear shaft 3, so that the first motor generator 51 is quite high in transmission efficiency, the problem that an all-electric mode can only be implemented by complex gear shifting and a transmission chain in a transmission of a conventional power drive system 100 can be solved, few components are required by transmission in the all-electric mode, the transmission process is reliable and the transmission efficiency is high.

In addition, in terms of control logic, the control logic of the engine 4 and the control logic of the first motor generator 51 are independent of each other, so that the development time and cost of a manufacturer can be reduced and the power drive system 100 can be prevented from high failure rate.

In addition, a vehicle including the foregoing power drive system 100 is further provided according to the embodiments of the present disclosure. It should be noted that other components of the vehicle according this embodiment of the present disclosure such as a driving system, a steering system, and a braking system are all existing technologies well known to a person of ordinary skill in the art, and therefore detailed descriptions of such known structures are omitted herein.

In the descriptions of this specification, descriptions of reference terms "one embodiment", "some embodiments," "an example," "a specific example", or "some examples" are intended to indicate that particular features, structures, materials, or characteristics described with reference to the embodiment or example are included in at least one embodiment or example of the present disclosure. In this specification, schematic descriptions of the foregoing terms do not need to aim at a same embodiment or example. Besides, the specific features, the structures, the materials or the characteristics that are described may be combined in a proper manner in any one or more embodiments or examples. In addition, in a case that is not mutually contradictory, persons skilled in the art can combine or group different embodiments or examples that are described in this specification and features of the different embodiments or examples.

Although the embodiments of the present disclosure are shown and described above, it may be understood that the foregoing embodiments are examples, and cannot be understood as limitations to the present disclosure. A person of ordinary skill in the art may make changes, modifications, replacements, and variations to the foregoing embodiments without departing from the scope of the present disclosure.

## Claims

1. A power drive system for a vehicle, comprising:
an engine:
multiple input shafts, the engine being arranged to selectively engage with at least one of the multiple input shafts and a gear driving gear being arranged on each of the input shafts;
multiple output shafts, a gear driven gear being arranged on each of the output shafts and the multiple gear driven gears being correspondingly meshed with the multiple gear driving gears;
a reverse gear shaft, a first reverse gear shaft gear and a second reverse gear shaft gear being idly mounted on the reverse gear shaft, the first reverse gear shaft gear being meshed with one gear driving gear and each of the first reverse gear shaft gear and the second reverse gear shaft gear being arranged to engage with the reverse gear shaft;
a reverse gear output gear, the reverse gear output gear being fixedly arranged on one output shaft and the reverse gear output gear being meshed with the second reverse gear shaft gear; and
a first motor generator, the first motor generator being arranged to be linked with the reverse gear shaft.

2. The power drive system for the vehicle according to claim 1, further comprising a first reverse gear shaft synchronizer, wherein the first reverse gear shaft synchronizer is configured to engage the reverse gear shaft with the first reverse gear shaft gear.

3. The power drive system for the vehicle according to claim 1 or 2, further comprising a second reverse gear shaft synchronizer, wherein the second reverse gear shaft synchronizer is configured to engage the reverse gear shaft with the second reverse gear shaft gear.

4. The power drive system for the vehicle according to any one of claims 1-3, wherein a first motor gear is also fixedly arranged on the reverse gear shaft, and the first motor gear is linked with the first motor generator.

5. The power drive system for the vehicle according to claim 1, further comprising a second motor generator, wherein the second motor generator is arranged to be linked with the engine.

6. The power drive system for the vehicle according to claim 5, further comprising:
a dual clutch, wherein the dual clutch is provided with an input end, a first output end and a second output end, the input end selectively engages with at least one of the first output end and the second output end, and the engine is connected to the input end.

7. The power drive system for the vehicle according to claim 6, wherein input end outer teeth are arranged at the input end, and the second motor generator is linked with the input end outer teeth.

8. The power drive system for the vehicle according to claim 6, wherein
the multiple input shafts comprise a first input shaft and a second input shaft idly mounted on the first input shaft, the first input shaft is connected to the first output end, and the second input shaft is connected to the second output end; and
the multiple output shafts comprise a first output shaft and a second output shaft.

9. The power drive system for the vehicle according to claim 8, wherein a first-gear driving gear and a third- and fifth-gear driving gear are fixedly arranged on the first input shaft, and a second-gear driving gear and a fourth- and sixth-gear driving gear are fixedly arranged on the second input shaft;
a first-gear driven gear, a second-gear driven gear, a third-gear driven gear and a fourth-gear driven gear are idly mounted on the first output shaft; a fifth-gear driven gear and a sixth-gear driven gear are idly mounted on the second output shaft; and
a first- and third-gear synchronizer positioned between the first-gear driven gear and the third- gear driven gear is arranged on the first output shaft, a second- and fourth-gear synchronizer positioned between the second-gear driven gear and the fourth-gear driven gear is also arranged on the first output shaft, a fifth-gear synchronizer positioned on one side of the fifth-gear driven gear is arranged on the second output shaft, and a sixth-gear synchronizer positioned on one side of the sixth-gear driven gear is also arranged on the second output shaft.

10. The power drive system for the vehicle according to claim 9, wherein the first reverse gear shaft gear is meshed with the first-gear driving gear.

11. The power drive system for the vehicle according to claim 9, further comprising a first reverse gear shaft synchronizer, wherein the first reverse gear shaft synchronizer is arranged on the reverse gear shaft and configured to engage with the first reverse gear shaft gear;
the first reverse gear shaft synchronizer and the fifth-gear synchronizer share a shifting yoke mechanism; when the first reverse gear shaft synchronizer is driven by the shifting yoke mechanism to engage with the first reverse gear shaft gear, the fifth-gear synchronizer is disengaged from the fifth-gear driven gear; and when the fifth-gear synchronizer is driven by the shifting yoke mechanism to engage with the fifth-gear driven gear, the first reverse gear shaft synchronizer is disengaged from the first reverse gear shaft gear.

12. The power drive system for the vehicle according to claim 9, further comprising a second reverse gear shaft synchronizer, wherein the second reverse gear shaft synchronizer is arranged on the reverse gear shaft and configured to engage with the second reverse gear shaft gear;
the second reverse gear shaft synchronizer and the sixth-gear synchronizer share a shifting yoke mechanism; when the second reverse gear shaft synchronizer is driven by the shifting yoke mechanism to engage with the second reverse gear shaft gear, the sixth-gear synchronizer is disengaged from the sixth-gear driven gear; and when the sixth-gear synchronizer is driven by the shifting yoke mechanism to engage with the sixth-gear driven gear, the second reverse gear shaft synchronizer is disengaged from the second reverse gear shaft gear.

13. The power drive system for the vehicle according to claim 8, wherein a first-output-shaft output gear is fixedly arranged on the first output shaft, a second-output-shaft output gear is fixedly arranged on the second output shaft, and the first-output-shaft output gear and the second-output-shaft output gear are meshed with a differential power input gear of the vehicle respectively.

14. A vehicle, comprising the power drive system according to any one of claims 1-13.
